# FASCICULE DE BREVET EUROPEEN

(11) **EP 2 500 193 B1**
(45) Date de publication et mention de la délivrance du brevet: **19.11.2014**
(21) Numéro de dépôt: 12159823.9
(22) Date de dépôt: 16.03.2012
(51) Int. Cl.: B60H 1/24, B60H 1/00

(54) **Elément de garnissage de véhicule automobile comprenant au moins un élément fonctionnel rapporté et fixé sur l'élément de garnissage**
Verkleidungsteil eines Kraftfahrzeugs, das mindestens ein auf dem Verkleidungsteil angebrachtes und befestigtes funktionelles Element umfasst
Automobile trim element including at least one functional element mounted on and attached to the trim element

(30) Priorité: 18.03.2011 FR 1152262
(43) Date de publication de la demande: 19.09.2012
(73) Titulaire: Faurecia Intérieur Industrie, 92000 Nanterre (FR)
(72) Inventeur: Bouldron, Ludovic, 95300 Pontoise (FR); Gaignon, Jérôme, 86400 SAINT MACOUX (FR)
(74) Mandataire: Domenego, Bertrand

(56) Documents cités:
- EP-A1- 1 034 952
- EP-A1- 1 096 353
- DE-A1- 19 521 890
- FR-A1- 2 871 414
- FR-A1- 2 890 028

## Description

La présente invention concerne un élément de garnissage de véhicule automobile du type comprenant au moins un élément fonctionnel, ledit élément fonctionnel comprenant un corps, s'étendant dans une ouverture de l'élément de garnissage, et un élément de revêtement s'étendant autour d'au moins une partie du corps et en surface de l'élément de garnissage.

L'invention s'applique plus particulièrement à un élément fonctionnel, tel qu'un aérateur, rapporté et fixé sur une planche de bord de véhicule automobile, formant l'élément de garnissage.

EP 1 034 952 A1 décrit un élément de garnissage selon le préambule de la revendication 1.

II est connu de prévoir un ou plusieurs dispositifs de coussin gonflable dans une planche de bord afin d'assurer la protection du conducteur et/ou du passager à côté du conducteur en cas de choc contre le véhicule automobile. Le gonflage du coussin gonflable ou un choc important sur la planche de bord occasionnent des déformations du corps de la planche de bord, ce qui peut endommager les points de fixation de différents éléments fonctionnels sur le corps de planche de bord et provoquer la désolidarisation de ces éléments fonctionnels du corps. C'est particulièrement le cas pour les aérateurs, qui sont disposés à proximité du ou des dispositifs de coussin gonflable et dont la fixation est assurée par clipsage sur le corps de planche de bord. Lors du gonflage du coussin gonflable, il arrive que les moyens d'ancrage de l'aérateur sortent de leur point d'ancrage dans la planche de bord et que l'aérateur soit éjecté dans l'habitacle du véhicule, ce qui représente un risque considérable pour les occupants du véhicule, l'aérateur ou une partie de celui-ci formant un projectile dans l'habitacle du véhicule.

Sans aller jusqu'à l'éjection de l'aérateur dans l'habitacle, ces moyens de clipsage sont peu sûrs et la désolidarisation de l'aérateur de la planche de bord peut se produire avec des chocs de moindre importance, par exemple lors de phases de tests de la planche de bord ou d'opérations d'assemblage du véhicule automobile. Cette désolidarisation entraîne une perte de temps pour fixer à nouveau l'aérateur ou peut entraîner une perte de qualité de la planche de bord finie si la désolidarisation passe inaperçue lors du montage du véhicule.

Pour pallier ces inconvénients, il a été proposé de fixer l'élément fonctionnel par vissage directement dans le corps de la planche de bord, en utilisant une vis passant sous la planche de bord afin d'être invisible depuis l'habitacle du véhicule. Cependant une telle solution n'est pas satisfaisante. En effet, si l'élément fonctionnel est endommagé et doit être remplacé, il faut démonter toute la planche de bord du véhicule automobile pour pouvoir le démonter. En outre, le vissage peut entraîner des déformations de l'élément fonctionnel et/ou de la planche de bord, ce qui peut occasionner une perte de qualité esthétique ou un endommagement de l'élément fonctionnel, comme des fuites d'air dans le cas d'un aérateur.

L'un des buts de l'invention est de pallier ces inconvénients en proposant un élément de garnissage dans lequel un élément fonctionnel rapporté est fixé de façon sûre et esthétique sur l'élément de garnissage.

A cet effet, l'invention concerne un élément de garnissage du type précité, dans lequel l'élément de revêtement comprend des moyens d'ancrage dans l'élément de garnissage et des moyens de fixation desdits moyens d'ancrage au corps de l'élément fonctionnel.

Ainsi, la fixation de l'élément fonctionnel est assurée par l'ancrage de l'élément de revêtement dans l'élément de garnissage, ce qui se fait de façon esthétique sans risque de déformation de l'élément fonctionnel et/ou de l'élément de garnissage, et renforcée par la fixation de l'élément de revêtement dans le corps de l'élément fonctionnel, ce qui empêche de façon efficace l'éjection des moyens d'ancrage et donc de l'élément fonctionnel.

Selon d'autres caractéristiques de l'élément de garnissage selon l'invention :
- les moyens d'ancrage sont formés par au moins une patte ressort s'étendant à partir de l'élément de revêtement et coopérant avec un orifice de l'élément de garnissage.
- les moyens de fixation sont formés par une vis traversant les moyens d'ancrage, vissée dans le corps de l'élément fonctionnel et passant par l'élément de garnissage ;
- l'élément de garnissage comprend une surface externe, pourvue d'au moins une ouverture, le corps de l'élément fonctionnel débouchant dans ladite ouverture ;
- l'élément de revêtement s'étend sur la périphérie de l'ouverture de la surface externe ;
- les moyens d'ancrage et les moyens de fixation s'étendent sous la surface externe et ne sont pas visibles de l'extérieur de l'élément de garnissage ;
- l'orifice de l'élément de garnissage est formé dans une surface latérale de l'élément de garnissage, un élément de masquage étant fixé sur ladite surface latérale après la fixation de l'élément fonctionnel ;
- l'élément fonctionnel est un aérateur de véhicule automobile, le corps dudit aérateur comprenant une sortie d'air, une pluralité d'ailettes s'étendant en travers de ladite sortie d'air, ladite sortie d'air débouchant dans l'ouverture de l'élément de garnissage ;
- l'élément de revêtement est une couronne de décor surmontant et entourant la sortie d'air de l'aérateur ; et
- l'élément de garnissage est une planche de bord de véhicule automobile.

D'autres aspects et avantages de l'invention apparaîtront à la lecture de la description qui suit, donnée à titre d'exemple et faite en référence aux dessins annexés, dans lesquels :
- la Fig. 1 est une représentation schématique en perspective d'un élément de garnissage selon l'invention,
- la Fig. 2 est une représentation schématique en perspective d'un élément fonctionnel destiné à être fixé à l'élément de garnissage selon l'invention,
- la Fig. 3 est une représentation schématique en perspective de la fixation de l'élément fonctionnel dans l'élément de garnissage,
- la Fig. 4 est une représentation schématique en coupe de la fixation de l'élément fonctionnel dans l'élément de garnissage selon l'axe IV-IV de la Fig. 3.

Dans la description, on définit par « externe » ce qui est visible des éléments d'un véhicule automobile depuis l'habitacle du véhicule et par « interne » ce qui est masqué depuis cet habitacle.

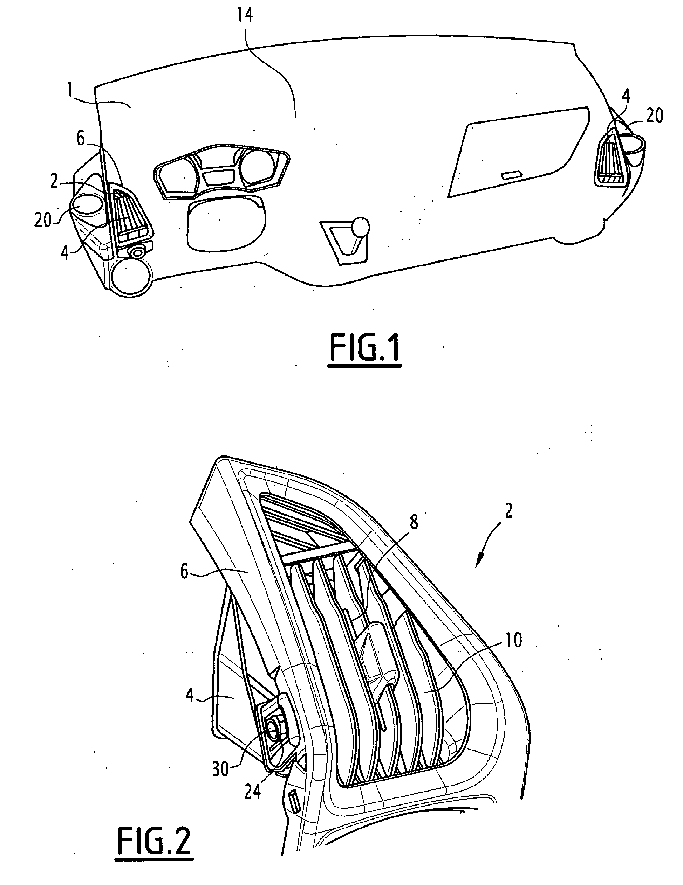

En référence à la Fig. 1, on décrit un élément de garnissage 1, tel qu'un corps de planche de bord, sur lequel est rapporté au moins un élément fonctionnel 2, tel qu'un aérateur de véhicule automobile. Dans la suite de la description, l'élément fonctionnel 2 sera décrit comme un aérateur comprenant un corps 4 et un élément de revêtement 6. Cependant, il est entendu que l'invention s'applique à tout autre élément fonctionnel fixé sur l'élément de garnissage et comprenant un corps et un élément de revêtement.

Le corps 4 de l'aérateur est un conduit d'air de forme sensiblement tubulaire comprenant une sortie d'air 8 en travers de laquelle s'étendent une pluralité d'ailettes 10 permettant de commander de diriger le flux d'air sortant de l'aérateur. L'élément de revêtement 6 est formé par un enjoliveur présentant une forme de couronne de décor surmontant et entourant la sortie d'air 8, comme représenté sur la Fig. 2. Un tel aérateur est classique et ne sera pas décrit plus en détail ici en dehors de ses moyens d'ancrage et de fixation.

L'élément de garnissage 1 comprend une surface externe 14, par exemple formée par une peau de garnissage, recouvrant une armature 16, destinée à recevoir les éléments fonctionnels et techniques classiques dans ce type d'application. La surface externe 14 est délimitée par des surfaces latérales 18 s'étendant sensiblement perpendiculairement à la surface externe 14 vers l'intérieur de l'élément de garnissage. Des éléments de masquage 20 sont fixés sur les surfaces latérales 18 afin de masquer celles-ci et forment les bords de l'élément de garnissage 1. Ces éléments de masquages, représentés sur la Fig. 1, comprennent par exemple un volume de rangement, du type vide-poche, ou autre.

L'élément fonctionnel 2 est disposé dans une ouverture pratiquée dans la surface externe 14 et l'armature 16 de l'élément de garnissage 1 au voisinage d'une surface latérale 18, de sorte que le corps 4 s'étende dans l'ouverture de l'armature 16 et que la sortie d'air 8 débouche dans l'ouverture de la surface externe 14, les ailettes 10 s'étendant en travers de ladite ouverture de la surface externe 14. Ainsi, le corps 4 de l'élément fonctionnel 2, s'étendant dans l'armature 16, est masqué par la surface externe 14.

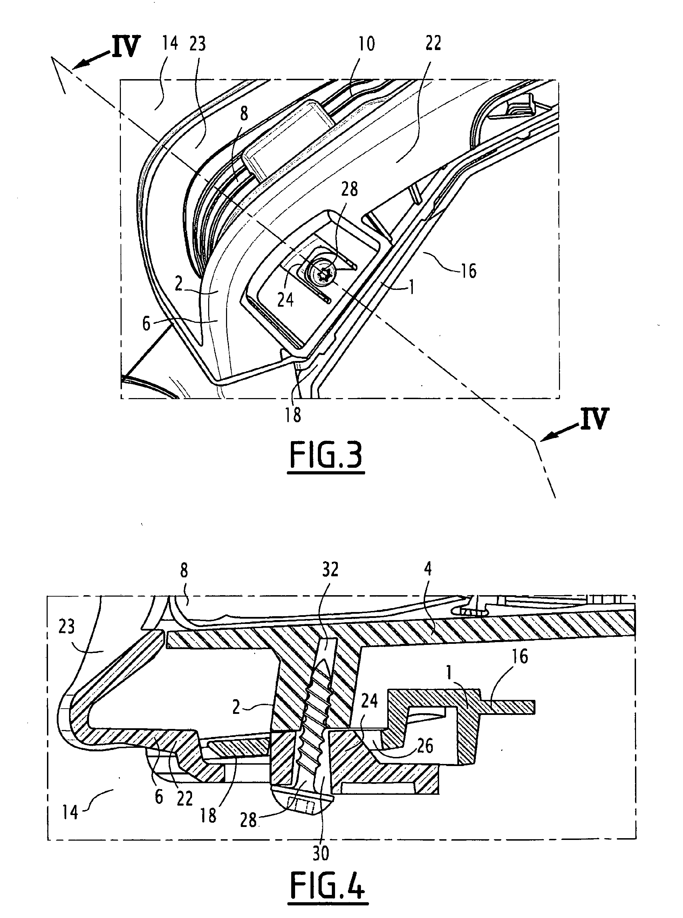

L'élément de revêtement 6 présente sensiblement une forme de jupe s'étendant à partir de la sortie d'air 8 et comprend une paroi latérale 22 s'étendant sensiblement parallèlement à une surface latérale 18 de l'élément de garnissage 1 et à l'axe du corps 4 de l'élément fonctionnel 2. La paroi latérale 22 s'étend à distance du corps 4 de sorte à recouvrir une partie de la surface latérale 18 de l'élément de garnissage 1, comme représenté sur les Fig. 3 et 4. L'élément de revêtement 6 comprend en outre une paroi de cadre 23 s'étendant sur la périphérie de l'ouverture formée dans la surface externe 14 afin de masquer cette ouverture et la transition entre le corps 4 et la surface externe 14 de l'élément de garnissage, ce qui améliore l'esthétique de l'élément de garnissage 1.

Cette paroi latérale 22 porte des moyens d'ancrage dans la surface latérale 18 de l'élément de garnissage 1. Ces moyens d'ancrage sont formés par au moins une patte ressort 24, ou « clips », s'étendant de la paroi latérale 22 vers la surface latérale 18, cette surface latérale 18 comprenant un orifice 26 dans lequel la patte ressort 24 s'engage et s'emboîte de sorte que la coopération entre la patte ressort 24 et l'orifice 26 assure un ancrage de l'élément de revêtement 6 sur l'élément de garnissage 1, comme représenté sur la Fig. 4.

Des moyens de fixation des moyens d'ancrage décrits ci-dessus sont en outre agencés pour fixer ces moyens d'ancrage au corps 4 de l'élément fonctionnel 2 afin d'assurer la fixation de l'élément fonctionnel 2 à l'élément de garnissage 1 par l'intermédiaire des moyens d'ancrage et des moyens de fixation.

Ces moyens de fixation sont formés par une vis 28 passant par un alésage 30 formé dans la patte ressort 24 et vissée dans un fût de vissage 32 s'étendant du corps 4 vers l'orifice 26 de la surface latérale, comme représenté sur la Fig. 4. L'alésage 30 s'étend sensiblement selon l'axe de la patte ressort 24 et le fût de vissage 32 s'étend dans la continuité de l'alésage 30 lorsque la patte ressort 24 coopère avec l'orifice 26 de la surface latérale 18. Le fût de vissage 32 s'étend de la paroi du corps 4 selon une direction sensiblement radiale et est par exemple réalisé d'une seule pièce avec ledit corps 4.

Ainsi, l'élément fonctionnel 2 est fixé à l'élément de garnissage 1 par les moyens d'ancrage, ce qui évite toute déformation ou endommagement de l'élément fonctionnel 2 et/ou de l'élément de garnissage 1 lors de la fixation de l'élément fonctionnel 2, à la différence d'une fixation par vissage direct de l'élément fonctionnel 2 sur l'élément de garnissage 1.

La fixation de l'élément fonctionnel 2 est renforcée par les moyens de fixation qui empêche toute désolidarisation de l'élément fonctionnel 2 de l'élément de garnissage 1 en cas de choc ou de déploiement d'un coussin gonflable. En effet, comme on peut le voir sur la Fig. 4, la vis 28 assure une fixation de la patte ressort 24 au fût de vissage 32 en passant par l'orifice 26 de la surface latérale 18 de l'armature 16 de l'élément de garnissage 1. Ainsi, en cas de choc ou de déploiement d'un coussin gonflable, la patte ressort 24 est empêchée de sortir de l'orifice 26 par la vis 28. On évite ainsi toute éjection de l'élément fonctionnel 2 dans l'habitacle du véhicule automobile, ce qui pourrait représenter un risque grave pour les occupants du véhicule automobile.

Les moyens d'ancrage et de fixation s'étendent sous la surface externe 14 et sur le côté de l'élément de garnissage 1 et sont complètement masqués par l'élément de masquage 20, lorsque celui-ci est rapporté sur la surface latérale 18, comme on peut le voir sur la Fig. 1. Ainsi, la fixation de l'élément fonctionnel 2 sur l'élément de garnissage 1 se fait de façon esthétique et est invisible depuis l'habitacle du véhicule automobile.

Cependant, si l'élément fonctionnel 2 venait à être endommagé et à nécessiter un remplacement, il suffit de démonter l'élément de masquage 20 pour avoir accès aux moyens d'ancrage et de fixation permettant le démontage de l'élément fonctionnel. Ainsi, il n'est pas nécessaire de démonter l'ensemble de l'élément de garnissage 1 pour permettre le remplacement ou la maintenance de l'élément fonctionnel.

Comme représenté sur la Fig. 1, la planche de bord, formant l'élément de garnissage 1, comprend deux aérateurs, formant les éléments fonctionnels 2. La fixation de ces éléments fonctionnels 2 peut se faire de la manière décrite ci-dessus par des moyens d'ancrage et des moyens de fixation.

Alternativement, si l'un des aérateurs n'est pas disposé à proximité d'un coussin gonflable ou n'est pas susceptible de subir des chocs entraînant un risque de désolidarisation, il est possible d'assurer sa fixation à la planche de bord uniquement par les moyens d'ancrage, sans utiliser la vis 28, ce qui permet de réaliser des économies de pièces et de temps de montage.

L'invention peut également s'appliquer à tout autre élément fonctionnel fixé à l'élément de garnissage par des moyens d'ancrage de type « clips » et risquant de se désolidariser de l'élément de garnissage en cas de choc ou de déploiement d'un coussin gonflable.

L'élément de garnissage peut être un autre élément de l'habitacle automobile que la planche de bord, tel qu'un panneau de porte ou autre, sur lequel un ou des éléments fonctionnels sont rapportés.

## Revendications

1. Elément de garnissage (1) de véhicule automobile comprenant au moins un élément fonctionnel (2), ledit élément fonctionnel (2) comprenant un corps (4), s'étendant dans une ouverture de l'élément de garnissage, et un élément de revêtement (6) s'étendant autour d'au moins une partie du corps (4) et en surface de l'élément de garnissage, **caractérisé en ce que** l'élément de revêtement (6) comprend des moyens d'ancrage dans l'élément de garnissage (1) et des moyens de fixation desdits moyens d'ancrage au corps (4) de l'élément fonctionnel (2).

2. Elément de garnissage selon la revendication 1, **caractérisé en ce que** les moyens d'ancrage sont formés par au moins une patte ressort (24) s'étendant à partir de l'élément de revêtement (6) et coopérant avec un orifice (26) de l'élément de garnissage (1).

3. Elément de garnissage selon la revendication 1 ou 2, **caractérisé en ce que** les moyens de fixation sont formés par une vis (28) traversant les moyens d'ancrage, vissée dans le corps (4) de l'élément fonctionnel (2) et passant par l'élément de garnissage (1).

4. Elément de garnissage selon l'une quelconque des revendications 1 à 3, **caractérisé en ce que** l'élément de garnissage comprend une surface externe (14), pourvue d'au moins une ouverture, le corps (4) de l'élément fonctionnel (2) débouchant dans ladite ouverture.

5. Elément de garnissage selon la revendication 4, **caractérisé en ce que** l'élément de revêtement (6) s'étend sur la périphérie de l'ouverture de la surface externe (14).

6. Elément de garnissage selon la revendication 4 ou 5, **caractérisé en ce que** les moyens d'ancrage et les moyens de fixation s'étendent sous la surface externe (14) et ne sont pas visibles de l'extérieur de l'élément de garnissage (1).

7. Elément de garnissage, selon l'une quelconque des revendications 2 à 6, **caractérisé en ce que** l'orifice (26) de l'élément de garnissage est formé dans une surface latérale (18) de l'élément de garnissage, un élément de masquage (20) étant fixé sur ladite surface latérale (18) après la fixation de l'élément fonctionnel (2).

8. Elément de garnissage selon l'une quelconque des revendications 1 à 7, **caractérisé en ce que** l'élément fonctionnel (2) est un aérateur de véhicule automobile, le corps (4) dudit aérateur comprenant une sortie d'air (8), une pluralité d'ailettes (10) s'étendant en travers de ladite sortie d'air (8), ladite sortie d'air (8) débouchant dans l'ouverture de l'élément de garnissage (1).

9. Elément de garnissage selon la revendication 8, **caractérisé en ce que** l'élément de revêtement (6) est une couronne de décor surmontant et entourant la sortie d'air (8) de l'aérateur.

10. Elément de garnissage selon l'une quelconque des revendications 1 à 9, **caractérisé en ce que** l'élément de garnissage (1) est une planche de bord de véhicule automobile.

## Patentansprüche

1. Verkleidungselement (1) für ein Kraftfahrzeug, mindestens ein Funktionselement (2) aufweisend, wobei das Funktionselement (2) einen Körper (4), der sich in einer Öffnung des Verkleidungselements erstreckt, und ein Verblendungselement (6) aufweist, das sich um zumindest einen Teil des Körpers (4) und an der Oberfläche des Verkleidungselements erstreckt, **dadurch gekennzeichnet, dass** das Verblendungselement (6) Einrichtungen zur Verankerung im Verkleidungselement (1) und Einrichtungen zur Befestigung der Verankerungseinrichtungen (4) des Funktionselements (2) aufweist.

2. Verkleidungselement nach Anspruch 1, **dadurch gekennzeichnet, dass** die Verankerungseinrichtungen durch mindestens einen Federschuh (24) gebildet sind, der sich ausgehend vom Verblendungselement (6) erstreckt und mit einer Öffnung (26) des Verkleidungselements (1) zusammenwirkt.

3. Verkleidungselement nach Anspruch 1 oder 2, **dadurch gekennzeichnet, dass** die Befestigungseinrichtungen durch eine Schraube (28) gebildet sind, die die Verankerungseinrichtungen durchquert, im Körper (4) des Funktionselements (2) verschraubt ist, und durch das Verkleidungselement (1) verläuft.

4. Verkleidungselement nach einem der Ansprüche 1 bis 3, **dadurch gekennzeichnet, dass** das Verkleidungselement eine Außenfläche (14) aufweist, die mit mindestens einer Öffnung versehen ist, wobei der Körper (4) des Funktionselements (2) in die Öffnung mündet.

5. Verkleidungselement nach Anspruch 4, **dadurch gekennzeichnet, dass** sich das Verblendungselement (6) auf dem Umfang der Öffnung der Außenfläche (14) erstreckt.

6. Verkleidungselement nach Anspruch 4 oder 5, **dadurch gekennzeichnet, dass** sich die Verankerungseinrichtungen und die Befestigungseinrichtungen unter der Außenfläche (14) erstrecken und von außerhalb des Verkleidungselements (1) nicht sichtbar sind.

7. Verkleidungselement nach einem der Ansprüche 2 bis 6, **dadurch gekennzeichnet, dass** die Öffnung (26) des Verkleidungselements in einer Seitenfläche (18) des Verkleidungselements ausgebildet ist, wobei ein Maskierungselement (20) nach der Befestigung des Funktionselements (2) auf der Seitenfläche (18) befestigt wird.

8. Verkleidungselement nach einem der Ansprüche 1 bis 7, **dadurch gekennzeichnet, dass** das Funktionselement (2) ein Kraftfahrzeuglüfter ist, wobei der Körper (4) des Lüfters einen Luftaustritt (8) aufweist, wobei sich mehrere Lamellen (10) quer über den Luftaustritt (8) erstrecken, wobei der Luftaustritt (8) in die Öffnung des Verkleidungselements (1) mündet.

9. Verkleidungselement nach Anspruch 8, **dadurch gekennzeichnet, dass** das Verblendungselement (6) ein Dekoraufsatz ist, der über dem Luftaustritt (8) des Lüfters liegt und diesen umgibt.

10. Verkleidungselement nach einem der Ansprüche 1 bis 9, **dadurch gekennzeichnet, dass** das Verkleidungselement (1) ein Kraftfahrzeugarmaturenbrett ist.

## Claims

1. Automobile trim element (1) comprising at least one functional element (2), said functional element (2) comprising a body (4) extending through an opening of the trim element and a cover element (6) extending around at least one part of the body (4) and on the surface of the trim element, **characterised in that** the cover element (6) comprises means for providing an anchor in the trim element (1) and means for fixing said anchoring means to the body (4) of the functional element (2).

2. Trim element as claimed in claim 1, **characterised in that** the anchoring means are formed by at least one spring tab (24) extending from the cover element (6) and co-operating with an orifice (26) of the trim element (1).

3. Trim element as claimed in claim 1 or 2, **characterised in that** the fixing means are formed by a screw (28) extending through the anchoring means, screwed into the body (4) of the functional element (2) and traversing the trim element (1).

4. Trim element as claimed in any one of claims 1 to 3, **characterised in that** the trim element comprises an external surface (14) provided with at least one opening, the body (4) of the functional element (2) opening into said opening.

5. Trim element as claimed in claim 4, **characterised in that** the cover element (6) extends across the periphery of the opening of the external surface (14).

6. Trim element as claimed in claim 4 or 5, **characterised in that** the anchoring means and the fixing means extend underneath the external surface (14) and are not visible from the exterior of the trim element (1).

7. Trim element as claimed in any one of claims 2 to 6, **characterised in that** the orifice (26) of the trim element is formed in a lateral surface (18) of the trim element, a masking element (20) being affixed to said lateral surface (18) after fixing the functional element (2).

8. Trim element as claimed in any one of claims 1 to 7, **characterised in that** the functional element (2) is an automobile ventilator, the body (4) of said ventilator comprising an air outlet (8), a plurality of fins (10) extending across said air outlet (8), said air outlet (8) opening into the opening of the trim element (1).

9. Trim element as claimed in claim 8, **characterised in that** the cover element (6) is a decorative crown surmounting and surrounding the air outlet (8) of the ventilator.

10. Trim element as claimed in any one of claims 1 to 9, **characterised in that** the trim element (1) is an automobile dashboard.
